# EUROPÄISCHE PATENTANMELDUNG

(11) **EP 3 378 804 A1**
(43) Veröffentlichungstag der Anmeldung: **26.09.2018**
(21) Anmeldenummer: 18156314.9
(22) Anmeldetag: 12.02.2018
(51) Int. Cl.: B65G 47/08

(54) **VORRICHTUNG UND VERFAHREN ZUM UMGANG MIT IN MINDESTENS EINER REIHE BEWEGTEN STÜCKGÜTERN**

(30) Priorität: 24.03.2017 DE 102017204997
(71) Anmelder: Krones Aktiengesellschaft, 93073 Neutraubling (DE)
(72) Erfinder: BEER, Erhard, 93073 Neutraubling (DE); KOLLMUSS, Manuel, 93073 Neutraubling (DE); EHBERGER, Marco, 93073 Neutraubling (DE); GRIMM, Sebastian, 93073 Neutraubling (DE); ASTNER, Michael, 93073 Neutraubling (DE); MEHDI, Arsalan, 93073 Neutraubling (DE); SCHWALB, Felix, 93073 Neutraubling (DE)
(74) Vertreter: Benninger, Johannes

(57) **Zusammenfassung**

Die Erfindung betrifft eine Vorrichtung (10) und ein Verfahren zum Umgang mit in mindestens einer Reihe (1) hintereinander bewegten Stückgütern (2) mit mindestens einer Transporteinrichtung (3) zur Zuführung der Stückgüter (2) zu einem Gruppiermodul (20) und mindestens einem in einer Transportrichtung (TR) der Stückgüter (2) innerhalb des Gruppiermoduls (20) angeordneten Manipulator (5). Der Manipulator (5) ist zur klemmenden und/oder kraft- und/oder formschlüssigen Erfassung jeweils wenigstens eines Stückgutes (2) innerhalb eines Erfassungsbereiches (4) sowie zur räumlichen Abtrennung des wenigstens einen Stückgutes (2) von der mindestens einen Reihe (1) und zu ihrer Verbringung in eine definierte relative Zielposition (P) und/oder -ausrichtung gegenüber nachfolgenden Stückgütern (2) vorbereitet und ausgestattet. Die Stückgüter (2) gelangen jeweils von der mindestens einen Reihe (1) in Transportrichtung (TR) in den Erfassungsbereich (4) des Manipulators, der innerhalb des Gruppiermoduls (20) in seiner relativen Position, insbesondere in einer Richtung mit einer Querkomponente zur Transportrichtung (TR), veränderlich ist.

## Beschreibung

Die vorliegende Erfindung betrifft eine Vorrichtung und ein Verfahren zum Umgang mit in mindestens einer Reihe bewegten Stückgütern mit den Merkmalen der unabhängigen Ansprüche 1 bzw. 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Das vorrangige Ziel der Erfindung besteht darin, eine exakte und positionsgenaue Verarbeitung und Handhabung von Stückgütern zu ermöglichen, die in mindestens einer Reihe befördert bzw. transportiert werden. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf eine Vorrichtung bzw. Handhabungsvorrichtung und ein Verfahren zum Umgang mit in mindestens einer Reihe hintereinander bewegten Stückgütern. Wenn im Zusammenhang der vorliegenden Beschreibung nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn zudem im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die im Zusammenhang mit der Erfindung beschriebene Vorrichtung bzw. Handhabungsvorrichtung, die dem Umgang mit in mindestens einer Reihe von hintereinander bewegten Stückgütern dient, umfasst wenigstens eine erste Transporteinrichtung zur Zuführung der Stückgüter zu einem Gruppiermodul und mindestens einen in Transportrichtung der Stückgüter in dem Gruppiermodul angeordneten Manipulator. Die wenigstens eine erste Transporteinrichtung dient der Zuführung der in einer Reihe angeordneten bzw. bewegten Stückgüter zu einem Erfassungsbereich des mindestens einen Manipulators.

Der mindestens eine Manipulator ist typischerweise oder auch vorzugsweise zum klemmenden und/oder formschlüssigen und/oder kraftschlüssigen Erfassen und/oder Entgegennehmen mindestens eines Stückgutes der über die erste Transporteinrichtung zugeführten Reihe innerhalb eines Erfassungsbereiches des Manipulators sowie zum Abtrennen und Überführen des mindestens einen Stückgutes der Reihe in eine Zielposition innerhalb seines Erfassungsbereiches ausgebildet. Mit dem mindestens einen Manipulator können bevorzugt eine Mehrzahl an hintereinander bewegten Stückgütern als palettierfähigen Lage oder Teillage zusammengestellt werden. Alternativ und/oder zusätzlich kann der mindestens eine Manipulator des Gruppiermoduls auch als Dreh- und Verteilsystem für Stückgüter verwendet werden, ohne dabei eine definierte relative Anordnung der Stückgüter zur Vorbereitung einer palettierfähigen Lage oder Teillage herzustellen. Die derart gedrehten und/oder verteilten Stückgüter werden anschließend über geeignete Fördersysteme o.ä. einer weiteren Verarbeitung zugeführt.

Wenn im Zusammenhang der vorliegenden Erfindung von einer klemmenden Erfassung von Stückgütern durch den Manipulator die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können. Beim Verschieben der Stückgüter kann dies in Flucht zur den nachfolgenden Stückgütern erfolgen. Insbesondere wird den erfassten Stückgütern hierbei durch den Manipulator nur eine Geschwindigkeitskomponente in Transportrichtung aufgeprägt. Beim Verschieben mit seitlichem Versatz gegenüber den nachfolgenden Stückgütern wird den erfassten Stückgütern dagegen noch eine zusätzliche Richtungskomponente aufgeprägt.

Vorzugsweise ist vorgesehen, dass zu dem Zeitpunkt des Erfassens mindestens eines Stückgutes zwischen diesem und den direkt nachfolgenden Stückgütern der Reihe kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der zuführenden Transporteinrichtung für die in Reihe hintereinander bewegten Stückgütern erreicht werden. Insbesondere kann vorgesehen sein, dass die Oberfläche der Transporteinrichtung gummiert ist, um ein Verrutschen der Stückgüter auf der Transporteinrichtung zu verhindern bzw. um den Staudruck der ständig nachgeförderten Stückgutreihe abzubauen bzw. zumindest signifikant zu reduzieren.

Bei dem Erfassen des mindestens einen Stückgutes aus der Reihe wird dieses in seiner Bewegung in Transportrichtung der Stückgutreihe normalerweise nicht abgebremst. Stattdessen erhält das mindestens eine Stückgut nach dem Erfassen durch den Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter in der Reihe sein darf und die Richtungskomponente nicht entgegen der Transportrichtung der Stückgüter in der Reihe gerichtet sein darf. Ansonsten bestünde eine Kollisionsgefahr zwischen dem erfassten Stückgut und dem nachfolgenden, nunmehr zuvorderst befindlichen Stückgut der jeweiligenReihe.

Wenn in diesem Zusammenhang oder auch im Zusammenhang der gesamten Beschreibung von Vorgruppierungen, von einer palettierfähigen Lage oder von einer palettierfähigen Lagenanordnung die Rede ist, so sind damit generell alle Stückgut-Zusammenstellungen innerhalb einer horizontalen Ebene - ggf. auch in zwei oder drei Ebenen übereinander gestapelt - gemeint, die in Richtung von nachgeordneten Handhabungs- und/oder Palettierungs- und/oder Verpackungsstationen weitertransportiert werden können. Generell ist bei den erfindungsgemäßen Verfahren davon auszugehen, dass zunächst ein hoher Ordnungsgrad der Stückgüter vorliegt, da diese als Reihe bzw. Reihen zum Manipulator oder zu den Manipulatoren befördert werden. Dort wird diese Ordnung zunächst weitgehend aufgelöst, da die Stückgüter an unterschiedliche Positionen gebracht werden, wodurch jedoch der Ordnungsgrad der Stückgüter untereinander in Transportrichtung allmählich wieder zunimmt. Im weiteren, hier nicht mehr detailliert erläuterten Transportverlauf, kann der Ordnungsgrad nochmals deutlich stärker zunehmen, indem Abstände der Lagenanordnungen oder Vorgruppierungen durch deren Aneinanderfügen und/oder Zusammenschieben aufgehoben und die Lagenanordnungen als weitgehend geschlossene Lagen wahlweise zusammengefasst werden, bspw. durch geeignete Umverpackungen. Wahlweise jedoch können die zusammengestellten Stückgüter auch in der jeweiligen Lagenanordnung gestapelt und/oder palettiert und erst anschließend mit Umverpackungen umhüllt bzw. ausgestattet werden. Außerdem sei darauf hingewiesen, dass der Begriff der palettierfähigen Lage bzw. der palettierfähigen Lagenanordnung immer auch die Teillage bzw. Teillagenanordnung umfasst und umgekehrt.

Bei der erfindungsgemäßen Ausführungsform der Vorrichtung ist vorgesehen, die relative Position des wenigstens einen Manipulators innerhalb des Gruppiermoduls veränderlich ist. Der mindestens eine Manipulator der erfindungsgemäßen Vorrichtung ist vorzugsweise oberhalb einer horizontalen Transportebene angeordnet, die beispielsweise durch eine zweite Transporteinrichtung, welche nachfolgend als Horizontalfördereinrichtung bezeichnet wird, gebildet wird. Die mindestens eine Horizontalfördereinrichtung ist hierbei in einer Flucht zu der mindestens einen ersten Transporteinrichtung angeordnet. Der Manipulator und die Horizontalfördereinrichtung bilden dabei das Gruppiermodul, in dem die über die mindestens eine Transporteinrichtung zugeführten Stückgüter gemäß einem gewünschten Lagenschema angeordnet und/oder ausgerichtet werden. Der wenigstens eine Manipulator ist insbesondere innerhalb des Gruppiermoduls beweglich angeordnet, um den Erfassungsbereich des Manipulators zu vergrößern. Hierzu kann vorgesehen sein, dass der wenigstens eine Manipulator zumindest innerhalb einer insbesondere horizontalen Ebene bewegbar und/oder verschiebbar ist, die vorzugsweise parallel zur Transportebene der Stückgüter angeordnet ist. Besonders bevorzugt kann der mindestens eine Manipulator innerhalb dieser horizontalen Ebene mit einer Querkomponente zur Transportrichtung verstellt werden. Weiterhin kann vorgesehen sein, dass der wenigsten eine Manipulator vertikal verstellbar ist und somit in unterschiedlichen Höhen über der Transportebene angeordnet werden kann. Um die Flexibilität der Verarbeitung von Stückgütern innerhalb des Gruppiermoduls weiterhin zu erhöhen kann alternativ oder zusätzlich vorgesehen sein, dass der wenigsten eine Manipulator innerhalb des Gruppiermoduls zumindest um eine in etwa vertikal zur Transportebene der Stückgüter stehende, insbesondere vertikale Drehachse bewegt und/oder verdreht werden kann.

Insbesondere kann der wenigstens eine Manipulator im laufenden Produktionsbetrieb oder vorbereitend für einen Positionierungs- und/oder Lagenbildungsbetrieb, insbesondere bei einer Umstellung auf ein neues Lagenschema, innerhalb des Gruppiermoduls in seiner relativen Position verstellt werden. Bei einem Gruppiermodul mit mindestens zwei, insbesondere durch Tripoden gebildeten Manipulatoren erfolgt die Einstellung vorzugsweise derart gesteuert, dass die Arme der Tripoden nicht miteinander kollidieren. Die mindestens zwei Manipulatoren können beispielsweise symmetrisch verstellt werden, d.h. jeweils gleich auseinander bewegt oder aufeinander zu bewegt werden. Hierbei können die mindestens zwei Manipulatoren mechanisch miteinander gekoppelt sein, so dass für die Verstellung nur ein einziger Antrieb notwendig ist. Alternativ können die mindestens zwei Manipulatoren auch asymmetrisch verstellt werden, wobei beispielsweise die mindestens zwei Manipulatoren in dieselbe Richtung senkrecht zur Transportrichtung TR verfahren werden. Hierbei können die Manipulatoren entweder um dieselbe Distanz oder aber um verschiedene Distanzen bewegt werden. Alternativ kann auch einer der Manipulatoren beispielsweise in Transportrichtung gesehen in einem ersten Abstand nach rechts bewegt werden und der andere Manipulator in Transportrichtung gesehen in einem zweiten geringeren oder größeren Abstand nach links bewegt werden usw. In diesem Fall erfolgt die Verstellung der beiden Manipulatoren unabhängig voneinander.

Diese Verstellung kann beispielsweise sinnvoll bei einer Anordnung von zwei oder mehr in einer Transportrichtung der Stückgüter innerhalb eines Gruppiermoduls nebeneinander oder versetzt nebeneinander angeordneten Manipulatoren eingesetzt werden. Mindestens einer der wenigstens zwei Manipulatoren kann in seiner relativen Position innerhalb des Gruppiermoduls verstellt werden, insbesondere in einer Richtung mit einer Querkomponente zur Transportrichtung der Stückgüter. Dadurch kann vorzugsweise eine ungestörte Arbeitsweise des mindestens einen zweiten Manipulators ermöglicht werden, eine Kollision zwischen den zwei oder mehreren Manipulatoren wirksam verhindert werden etc. Besonders bei einer einbahnigen Zuführung von Stückgütern, die beispielsweise abwechselnd durch die mindestens zwei Manipulatoren abgegriffen werden, kann es notwendig oder auch sinnvoll sein, die Manipulatoren abwechselnd jeweils aus dem Wirkungsbereich des anderen Manipulators herauszunehmen.

Gemäß einer alternativen Ausführungsform umfasst die Vorrichtung mindestens zwei parallele Transporteinrichtungen zur Zuführung von mindestens zwei parallelen Reihen hintereinander bewegter Stückgüter und mindestens einen im Gruppiermodul beweglich angeordneten Manipulator. Insbesondere können zwei oder mehr Manipulatoren jeweils mindestens einer von zwei oder mehr parallelen Reihen räumlich zugeordnet und innerhalb dieser räumlichen Zuordnung beweglich angeordnet sein. Diese zwei oder mehr in Transportrichtung der Stückgüter nebeneinander oder parallel angeordnete Manipulatoren können ggf. phasenweise mit überschneidenden bzw. zumindest teilweise ineinandergreifenden Bewegungsräumen und/oder Erfassungsbereichen für die Stückgüter arbeiten, wobei die Steuervorschriften für die Bewegungssteuerungen der Manipulatoren Maßnahmen zur Kollisionsvermeidung enthalten sollten. Solche sich überschneidenden Arbeits- oder Erfassungsbereiche sind insbesondere bei Gruppierungen oder Lagenbildungen aus den Stückgütern sinnvoll, die aus mehreren Reihen eine Gesamtanordnung bzw. ein gemeinsames Lagenbild zur nachfolgenden Verpackung, Palettierung etc. bilden. Da insbesondere die mittleren Bereiche eines solchen Lagenbildes eine exakte Vorhersage und Zuordnung einer Position zum Bewegungsraum eines von zwei benachbarten Manipulatoren erschweren, da diese mittleren Positionen von beiden benachbarten Manipulatoren gleichermaßen erreicht werden können, sind zumindest temporär zeitliche Überschneidungen der Bewegungsräume für die Stellbewegungen der Manipulatoren sinnvoll. Wichtig ist hierbei, dass das Bewegungsmuster der Manipulatoren derart aufeinander abgestimmt ist, dass es bei Erfassen und Positionieren der Stückgüter nicht zu einer Kollision der Manipulatoren kommt. Insbesondere kann die Beweglichkeit der Manipulatoren innerhalb des Gruppiermoduls derart ausgestaltet sein, dass ein erster Manipulator in einer ersten Arbeitsposition beispielsweise Stückgüter von einer ersten und/oder zweiten Reihe abgreifen kann und in einer zweiten Arbeitsposition Stückgüter von einer zweiten und/oder dritten Reihe abgreifen kann. Dagegen kann ein zweiter Manipulator in einer ersten Arbeitsposition Stückgüter von einer dritten und/oder vierten Reihe und in einer zweiten Arbeitsposition Stückgüter von einer vierten und/oder fünften Reihe abgreifen. So können beispielsweise Stückgüter von der ersten und/oder zweiten Reihe durch den ersten Manipulator in der ersten Arbeitsposition angegriffen werden, während gleichzeitig Stückgüter der dritten und/oder vierten Reihe durch den zweiten Manipulator in der ersten Arbeitsposition oder Stückgüter der vierten und/oder fünften Reihe durch den zweiten Manipulator in der zweiten Arbeitsposition erfasst werden.

Der Manipulator kann beispielsweise als Parallelkinematik- oder als Deltakinematik-Roboter ausgebildet oder Teil eines solchen sein, wahlweise kann der Manipulator als Tripod oder Portalroboter, Mehrachsroboter etc. ausgebildet sein. Gemäß einer Ausführungsform können dem mindestens einen Manipulator wenigstens zwei gegenüberliegend, insbesondere paarweise gegenüberliegend angeordnete Klemm- und/oder Greifelemente zugeordnet sein, welche zum klemmenden und/oder kraft- und/oder formschlüssigen Erfassen sowie zum Abtrennen und Überführen des jeweiligen mindestens einen Stückgutes bzw. der mehreren erfassten Stückgüter in die Zielposition und/oder Zielausrichtung miteinander, insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Wenn im vorliegenden Zusammenhang von gegenüberliegend angeordneten Klemm- und/oder Greifelementen die Rede ist, so können damit insbesondere gegeneinander zustellbare Klemmbacken eines Greifkopfes o. dgl. gemeint sein, die das Stückgut an dessen Längsseiten erfassen. Es sind jedoch auch zahlreiche andere Greif-und/oder Erfassungsprinzipien sinnvoll, ggf. auch kombinierte. So kann wahlweise auch ein Unterdruckgreifer zur Unterstützung zum Einsatz kommen, der bspw. mit beweglichen mechanischen Greifelementen kombiniert sein kann. Grundsätzlich umfasst der Begriff des Manipulators bzw. der Begriff der Klemm- und/oder Greifelemente jegliche Erfassungs- und/oder Manipulationselemente, die zur beschriebenen Wechselwirkung mit den Stückgütern geeignet sein können und entsprechend ausgestattet sind.

Bei der Vorrichtung bzw. Handhabungsvorrichtung zum Umgang mit in mindestens einer Reihe hintereinander bewegten Stückgütern ist zudem vorgesehen, dass mindestens eines von zwei gegenüberliegend angeordneten Klemm- und/oder Greifelementen des mindestens einen Manipulators zum kraft- und/oder formschlüssigen Erfassen des mindestens einen Stückgutes ausgebildet ist. Da zudem in der vorliegenden Beschreibung neben der formschlüssigen Erfassung der Stückgüter auch oftmals von einer klemmenden Erfassung der Stückgüter die Rede ist, sei an dieser Stelle erwähnt, dass damit auch eine kraftschlüssige Erfassung mitumfasst sein soll, da bei den einzelnen Greifvorgängen in aller Regel nicht exakt bestimmbar und insbesondere nicht exakt voneinander abgrenzbar ist, wie die eigentliche Kraftübertragung von den Greifelementen auf die Stückgüter, die Gebinde etc. erfolgt. Eine formschlüssige Erfassung bei gleichzeitiger leichter Klemmung enthält in aller Regel auch einen zumindest leichten Kraftschluss.

Die Stückgüter können bei den hier beschriebenen vermittels der Vorrichtung durchführbaren Verfahren in mindestens einer Reihe oder in jeder von mindestens zwei parallelen Reihen in Transportrichtung ohne Abstände zueinander oder mit minimalen Abständen zueinander als geschlossene Formation zugeführt werden. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos-Formation transportiert werden, die keine Unterbrechung aufweist und eine beliebige Anzahl von Stückgütern umfasst. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Alternativ kann vorgesehen sein, dass zwischen einzelnen Stückgütern innerhalb einer Reihe bzw. zwischen Gruppen aus zwei, drei oder mehr direkt innerhalb einer Reihe aneinandergrenzend angeordneten Stückgütern vor dem Abgreifen durch den Manipulator definierte Lücken ausgebildet werden. Hierzu können beispielsweise vor dem Gruppiermodul entsprechende Gruppierbänder angeordnet sein, die durch eine kurzzeitige Beschleunigung einzelner Stückgüter oder Stückgutgruppen diese von den nachlaufenden Stückgütern der jeweiligen Reihe abtrennen. Insbesondere können hierbei wahlweise gleiche oder unterschiedliche große Lücken zwischen aufeinanderfolgenden Stückgütern und/oder Stückgutgruppen erzeugt werden.

Wenn die Vorrichtung wenigstens zwei parallelen Transporteinrichtungen zur Zuführung der Stückgüter zum Gruppiermodul aufweist, so kann gemäß einer weiteren Ausführungsform vorgesehen sein, dass wenigstens eine der Transporteinrichtungen in einer Richtung mit einer Querkomponente zur Transportrichtung verstellt werden kann. Somit kann die Position der Transporteinrichtung relativ zum Gruppiermodul geändert werden, wodurch die Stückgüter in jeweils unterschiedlichen Bereichen auf der Horizontalfördereinrichtung weiter befördert werden. Durch eine Verstellung mindestens einer Transporteinrichtung quer zur Transportrichtung ist ein Abstand zwischen den wenigstens zwei parallelen Transporteinrichtungen variabel einstellbar. Beispielsweise können die zwei parallelen Transporteinrichtungen direkt nebeneinander angeordnet werden, so dass der Manipulator Stückgüter bahnübergreifend von beiden Transporteinrichtungen gleichzeitig erfassen kann. Beispielsweise kann die mindestens eine Transporteinrichtung über ein geeignetes quer zur Transportrichtung angeordnetes Schienensystem oder einen anderen geeigneten Mechanismus, beispielsweise vermittels einer Spindelverstellung o.ä., quer zur Transportrichtung verschoben werden. Ob die Transporteinrichtung hierbei mehrgliedrig aufgebaut ist, so dass der letzte Abschnitt, der in den Erfassungsbereich des Manipulators mündet, annähernd senkrecht auf den Erfassungsbereich trifft, oder ob auch ein leicht schräges Auftreffen zugelassen werden soll, richtet sich nach den baulichen Gegebenheiten sowie auch nach den Möglichkeiten des Manipulators bzw. dessen Steuerung, auf leicht schräg in den Erfassungsbereich eintretende Stückgüter zu reagieren, d.h., diese Winkelabweichungen in der Transportrichtung durch entsprechende Steuerungsvorgaben ausgleichen und die Stückgüter sicher greifen zu können. Ein mehrgliedriger Aufbau der Transporteinrichtung würde bspw. zwei oder mehr Knickstellen aufweisen, wobei bspw. ein an den Erfassungsbereich anschließender Abschnitt parallel verschiebbar sein könnte, während ein vorgeordneter Abschnitt über eine gelenkige Verbindung eine Winkelabweichung zulassen könnte. Die vorzugsweise motorische Verstellung der Transporteinrichtung bzw. deren Abschnitte könnte vorzugsweise mit der Bewegungssteuerung des Manipulators oder der Manipulatoren gekoppelt sein, wodurch diese jeweils die Stückgüter exakt an der richtigen Stelle greifen, auch wenn die Transporteinrichtung zuvor an eine andere Übergabestelle zum Erfassungsbereich positioniert und/oder wenn sie im laufenden Positionierungsbetrieb verschoben wird.

Dies ist insbesondere vorteilhaft bei mindestens drei zuführenden Transporteinrichtungen, da durch eine entsprechende Verstellung mindestens einer Transporteinrichtung Platz geschaffen wird, damit der Manipulator problemlos Stückgüter von der Formation auf der mittig angeordneten Transporteinrichtung abgreifen kann. Werden die Stückgüter über drei oder mehr parallelen Transporteinrichtungen zugeführt, dann ist vorzugsweise vorgesehen, dass mindesten zwei der Transporteinrichtungen in ihren Abständen zueinander variabel eingestellt werden können

Die Verstellung der mindestens einen Transportrichtung kann im laufenden Produktionsbetrieb erfolgen oder aber vorbereitend für einen Positionierungs- und/oder Lagenbildungsbetrieb jeweils vor einem Produktionsstart und/oder bei einem Produktwechsel. Eine Verstellung im laufenden Produktionsbetrieb kann vorteilhaft eingesetzt werden, um das als nächstes in den Erfassungsbereich einlaufende Stückgut in einer Position anzuordnen, so dass der Manipulator das mindestens eine erfasste Stückgut nur fluchtend zu den nachfolgenden Stückgütern in Transportrichtung verschieben muss und nicht noch eine zusätzliche Bewegungskomponente notwendig ist, um das mindestens eine Stückgut seitlich versetzt zu den nachfolgenden Stückgütern anordnen zu müssen. Alternativ kann vorgesehen sein, dass die Positionierung der mindestens einen Transporteinrichtung relativ zu dem Erfassungsbereich des mindestens einen Manipulators nur einmal zu Beginn eines neuen Produktionszyklus entsprechend dem herzustellenden Lagenschema bestimmt und eingestellt wird und im laufenden Produktionsbetrieb in der eingestellten Position verbleibt.

Die Erfindung kann gemäß einer alternativen Ausführungsform auch auf Vorrichtungen anwendbar sein, bei denen Stückgüter in mindestens zwei Reihen zwei oder Gruppiermodulen zugeführt werden, wobei in jedem Gruppiermodul jeweils mindestens ein Manipulator angeordnet ist. Durch die Manipulatoren der mindestens zwei Gruppiermodule werden jeweils Stückgüter in einer Teillage zusammen gestellt, die anschließend in einem weiteren Transportabschnitt zu einer Gesamtlage zusammengefügt werden, beispielsweise indem zwei Teillagen zusammengeschoben werden. Dies kann beispielsweise vermittels von Schiebeelementen erfolgen, die jeweils parallel zur Transportrichtung der Horizontalfördereinrichtungen der Gruppiermodule ausgerichtet sind und quer zur Transportrichtung aufeinander zu bewegt werden können, um die Teillagen entsprechend zusammen zu führen.

Ein besonderer Vorteil des Verfahrens und der Vorrichtung besteht darin, dass der Manipulator eine Gruppierung und/oder Ausrichtung von mindestens einem Stückgut aus einer Formation von lückenlos und kontinuierlich zugeführten Stückgütern in einem einzigen Manipulationsschritt durchführen kann. Es kann somit auf herkömmlicherweise bekannte Vorrichtungen verzichtet werden, bei denen erst Stückgütergruppen von einem Zulauf abgetrennt und/oder distanziert und anschließend gedreht und/oder seitlich verschoben und/oder in definierten Zielpositionen angeordnet werden, wobei die Abtrennung einzelner Stückgüter oder Stückgut- Gruppen aus der abkommenden Formation durch den Manipulator selbst oder auch durch separate Vorgruppierungselemente erfolgen kann. Da der Manipulator auch mit definierten Lücken voneinander beabstandete Stückgüter und/oder Gruppen von zwei oder mehr Stückgütern bearbeiten kann, sind die Vorrichtung und das Verfahren besonders flexibel einsetzbar.

Die Möglichkeit des Bearbeitens von in geschlossener Formation zugeführten Stückgütern unterscheidet die vorliegende Erfindung von aus dem Stand der Technik bekannten Portalroboter- Systemen, die ebenfalls palettierfähige Lagenbilder herstellen können. Bei diesen bekannten Palettierungsvarianten, die insbesondere mit Portalrobotersystemen arbeiten, erfolgt eine Vorgruppierung in der Regel, bevor die Stückgüter den Erfassungsbereich des Portalsystems erreichen, da solche Portalrobotersysteme eine lückenlose Anlieferung von Stückgütern/Gebinden aus Gründen der Begrenzung der maximalen Arbeitsgeschwindigkeit des Portalsystems normalerweise nicht sinnvoll verarbeiten. Demgegenüber haben das beschriebene Verfahren und die Vorrichtung den besonderen Vorteil, dass sie die Vorgruppierung und die Positionierung für die Lagenbildung in einem integrierten (übergangslos) einzigen Positionierungsschritt schaffen können, was einen nicht unwesentlichen Teil des angestrebten Zeitgewinns gegenüber den aus dem Stand der Technik bekannten Varianten ausmacht.

Mit dem erfindungsgemäßen Verfahren und der erfindungsgemäßen Vorrichtung können somit Betriebskosten im laufenden Verpackungs- und/oder Palettierungsbetrieb sowie auch Systemkosten eingespart werden, da weniger Antriebe im Stückgut- Zulauf benötigt werden. Zudem kann die Leistung und somit der Durchsatz gegenüber den herkömmlich bekannten Systemen deutlich erhöht werden.

Abschließend wird darauf hingewiesen, dass Aspekte von Abwandlungen der zuvor anhand von zahlreichen Ausführungsvarianten beschriebenen erfindungsgemäßen Vorrichtung gleichermaßen auf das ebenfalls zuvor anhand von zahlreichen Ausführungsvarianten beschriebene erfindungsgemäße Verfahren bzw. auf eine der Ausführungsvarianten oder auch auf Kombinationen mehrerer dieser Ausführungsvarianten zu lesen sein können. Damit haben alle diese der Vorrichtung zugeordneten Aspekte, Abwandlungen und Varianten gleichermaßen als für die Verfahrensvarianten offenbarte Aspekte, Abwandlungen, Varianten und/oder Erfindungsdetails zu gelten. Umgekehrt gilt in gleicher Weise, dass Aspekte von Abwandlungen des zuvor anhand von zahlreichen Ausführungsvarianten beschriebenen erfindungsgemäßen Verfahrens gleichermaßen auf die ebenfalls zuvor anhand von zahlreichen Ausführungsvarianten beschriebene erfindungsgemäße Vorrichtung bzw. auf eine der Ausführungsvarianten oder auch auf Kombinationen mehrerer dieser Ausführungsvarianten zu lesen sein können. Damit haben alle diese dem Verfahren zugeordneten Aspekte, Abwandlungen und Varianten gleichermaßen als für die Vorrichtungsvarianten offenbarte Aspekte, Abwandlungen, Varianten und/oder Erfindungsdetails zu gelten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 und 2 zeigen schematisch eine erste Ausführungsform einer erfindungsgemäßen Handhabungsvorrichtung zum Umgang mit in mindestens einer Reihe hintereinander bewegten Stückgütern.
Figuren 3 bis 5 zeigen schematisch eine zweite Ausführungsform der Handhabu ngsvorrichtu ng.
Fig. 6 zeigt eine schematische Ansicht einer dritten Ausführungsform der Handhabungsvorrichtung in einer ersten Arbeitsanordnung.
Fig. 7 zeigt eine schematische Ansicht der dritten Ausführungsform der Handhabungsvorrichtung gemäß Fig. 3 in einer zweiten Arbeitsanordnung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

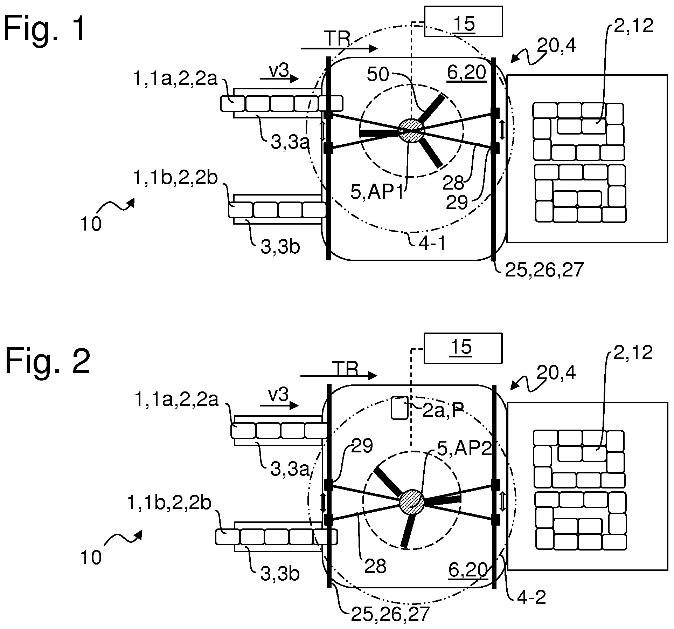

Die Figuren 1 und 2 zeigen schematisch eine erste Ausführungsform einer Handhabungsvorrichtung 10 zum Umgang mit in mindestens einer Reihe 1 hintereinander bewegten Stückgütern 2. Die gezeigte Handhabungsvorrichtung 10 umfasst zwei parallele Transporteinrichtungen 3, 3a, 3b, über welche unmittelbar aufeinanderfolgende Stückgüter 2, 2a, 2b unterbrechungsfrei und/oder mit kontinuierlicher Transportgeschwindigkeit v3 in einen Erfassungsbereich 4 mindestens eines Manipulators 5 eines Gruppiermoduls 20 der Handhabungsvorrichtung 10 transportiert werden. Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann größer sein als es die Außengrenzen der Horizontalfördereinrichtung 6 vorgeben, auf deren ungefähr horizontalen Oberseite die Stückgüter 2, 2a, 2b innerhalb des Gruppiermoduls 20 befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2 befinden können und/oder in dem die abzusetzenden Stückgüter 2 positioniert werden können.

Die hier in den Figuren 1 und 2 gezeigten Reihen 1, 1a, 1b von Stückgüter 2, 2a, 2b können bspw. in geschlossener Formation ununterbrochen fortlaufend in Transportrichtung TR auf den Transporteinrichtungen 3 befördert werden. Alternativ kann vorgesehen sein, dass zwischen einzelnen Stückgütern 2, 2a, 2b innerhalb einer Reihe 1, 1a, 1b bzw. zwischen Gruppen aus zwei oder drei direkt in Reihe 1, 1a, 1 aneinandergrenzend angeordneten Stückgütern 2, 2a, 2b definierte Lücken (nicht dargestellt) ausgebildet sind. Hierzu können beispielsweise vor dem Erfassungsbereich 4 entsprechende Gruppierbänder (nicht dargestellt) angeordnet sein, die durch eine kurzzeitige Beschleunigung einzelne Stückgüter 2a, 2b, 2c oder Stückgutgruppen von den nachlaufenden Stückgütern 2a, 2b, 2c abtrennen.

Stückgüter 2, 2a, 2b im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter zu Gebinden zusammengefasst sind.

Optional ist es möglich, dass die Stückgüter 2 auf einer Transporteinrichtung 3 mehrreihig oder auf mehreren, insbesondere parallel angeordneten Transporteinrichtungen 3, 3a, 3b, insbesondere in mehreren Parallelreihen 1, 1a, 1b zum Erfassungsbereich 4 des Manipulators 5 des Gruppiermoduls 20 hin transportiert werden. Die Parallelreihen 1, 1a, 1b können dabei beabstandet zueinander oder weitgehend ohne Abstand zueinander auf der wenigstens einen Transporteinrichtung 3 transportiert werden.

Der Manipulator 5 ist zum klemmenden und/oder formschlüssigen und/oder kraftschlüssigen Entgegennehmen von Stückgütern 2a, 2b, 2c innerhalb des Erfassungsbereichs 4 mit zwei gegeneinander zustellbaren Greiferbacken (nicht dargestellt) ausgebildet und ausgestattet. Zur Erklärung der Funktionsweise des Manipulators 5 wird auf die Patentanmeldung mit dem Aktenzeichen DE 10 2016 206 639 verwiesen, deren Inhalt hiermit in diese Anmeldung aufgenommen wird und deren Inhalt dem Fachmann beim Lesen der vorliegenden Anmeldung als bekannt gelten kann. Der Manipulator 5 erfasst mindestens ein zuvorderst in den Erfassungsbereich 4 einlaufendes Stückgut 2a, 2b, trennt dieses von den nachfolgenden Stückgütern 2a, 2b der jeweiligen Reihe 1a, 1b ab, überführt das mindestens eine Stückgut 2a, 2b in eine Zielposition und/oder -ausrichtung auf der Horizontalfördereinrichtung 6 und gibt dieses an dieser Zielposition frei. Während der Manipulator 5 in weiteren Verfahrensschritten weitere Stückgüter 2a, 2b der Reihen 1a, 1b abgreift, wird das mindestens eine in die Zielposition und/oder -ausrichtung verbrachte Stückgut 2a, 2b mit einer Transportgeschwindigkeit v6 auf der Horizontalfördereinrichtung 6 weiter in Transportrichtung TR bewegt. Vorzugsweise entspricht die Transportgeschwindigkeit v6 der Horizontalfördereinrichtung 6 dabei der Transportgeschwindigkeit v3 der Transporteinrichtungen 3a, 3b, so dass der relative Abstand zwischen dem mindestens einen Stückgut 2a, 2b und den noch nicht erfassten und manipulierten nachfolgenden Stückgütern 2a, 2b konstant ist.

Wenn im vorliegenden Fall bzw. generell im Zusammenhang der vorliegenden Erfindung von einem Manipulator 5 die Rede ist, kann es sich konkret bei dem zur Überführung des mindestens einen Stückgutes 2a, 2b in die Zielposition und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes (auch: des Manipulators 5), der die Stückgüter 2, 2a, 2b in der gewünschten Weise erfassen, verschieben, positionieren, platzieren, drehen etc. kann, um die jeweiligen Zielpositionen und/oder Zielausrichtungen für die Stückgüter anfahren zu können. Ebenso denkbar sind jedoch auch andere geeignete Manipulatorkonfigurationen, bspw. solche mit Portalroboter- Führungen oder ähnlichem. Bevorzugt besteht der Manipulator 5 aus einem Deltakinematik- oder Parallelkinematik-Roboter, um hoch dynamische Verschiebebewegungen zu realisieren und möglichst schnelle Taktzeiten zu ermöglichen. Weiterhin ist es bevorzugt, dass zumindest ein für die Erfassung des jeweils wenigstens einen Stückgutes 2a, 2bgeeigneter bzw. vorgesehener Abschnitt des jeweiligen Manipulators 5, 5a, 5b bzw. des jeweiligen Deltakinematik-Roboters um eine in etwa vertikale Achse rotierbar ist, insbesondere um einen Drehwinkel von mindestens 180°, was eine noch schnellere Positionierung der Stückgüter 2a, 2b bzw. von Gruppen mehrerer Stückgüter 2a, 2b ermöglichen kann. Wahlweise kann auch eine Rotierbarkeit um 360° oder mehr sinnvoll sein, was insbesondere ein sog. "Weiterdrehen" des Manipulators 5 nach dem Absetzen der jeweiligen Stückgüter 2a, 2b an ihren Zielpositionen auf der Horizontalfördereinrichtung 6 ermöglichen kann. Hierdurch wird ein Rückdrehen verzichtbar, was nochmals Zeit beim Positionieren einsparen kann. Diese und anderen dem Fachmann bekannte Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Die Bewegungen des Manipulators 5 werden insbesondere durch eine Steuerungseinrichtung 15 gesteuert und/oder kontrolliert, wobei sich der Bewegungsablauf des Manipulators 5 insbesondere aus der gewünschten Anordnung der Stückgüter 2 gemäß dem gewünschten Lagenschema 12 ergibt. Um den Bewegungsraum des Manipulators 5 besonders variabel zu gestalten, kann vorgesehen sein, dass der Manipulator 5 senkrecht zur Transportrichtung TR der Stückgüter beweglich ausgebildet ist. Insbesondere zeigt Fig. 1 den Manipulator 5 in einer ersten Arbeitsposition AP1, in der der Manipulator 5 näher zur zuführenden Transporteinrichtung 3a angeordnet ist, um mindestens ein Stückgut 2a von dieser abzugreifen und in eine in Fig. 2 dargestellte Zielposition P auf der Horizontalfördereinrichtung 6 zu verbringen. Dagegen ist der Manipulator 5 in Fig. 2 näher zur zuführenden Transporteinrichtung 3b angeordnet ist, um mindestens ein Stückgut 2b von dieser abzugreifen. Diese Beweglichkeit des Manipulators 5 senkrecht zur Transportrichtung TR bewirkt eine Vergrößerung des Erfassungsbereichs 4 des Manipulators 5. Analog dazu ist in Fig. 2 der Umfang eines Teil- Erfassungsbereichs 4-2 angedeutet, innerhalb dessen der Manipulator 5 bei Anordnung in der zweiten Arbeitsposition AP2 Stückgüter 2b erreichen, abgreifen und neu positionieren kann. Der gesamte Erfassungsbereich 4 ergibt sich aus der Summe der Teil- Erfassungsbereiche 4-1, 4-2 usw.

Der Manipulator 5 ist beispielsweise innerhalb des Grupppiermoduls 20 oberhalb der Horizontalfördereinrichtung 6 beispielsweise quer zur Transportrichtung TR der zugeführten Stückgüter 2a, 2b und der Horizontalfördereinrichtung 6 schiebebeweglich an mindestens einer Tragekonstruktion 25 angeordnet. Beispielsweise umfasst die Tragekonstruktion 25 zwei senkrecht zur Transportrichtung TR der Horizontalfördereinrichtung 6 angeordnete Rahmenelemente 26, die jeweils als Schlittenführung 27 ausgebildet sind. Zwischen den Rahmenelementen 26 erstrecken sich jeweils zwei überkreuzend angeordnete Rahmenelemente 28, an deren freien Enden jeweils Schlitten 29 angeordnet sind, die innerhalb der Rahmenelemente 26 geführt sind. Der Manipulator 5 ist vorzugsweise am Kreuzungspunkt der beiden Rahmenelemente 28 angeordnet und befestigt. Die Verstellung der Manipulatoren 5a, 5b kann alternativ auch über eine Spindelverstellung o.ä. erfolgen.

Alternativ und/oder zusätzlich kann vorgesehen sein, dass der mindestens eine Manipulator 5 vor dem Abgreifen von mindestens einem Stückgut 2 durch eine Drehung eine bevorzugte Ausgangslage und/oder -ausrichtung einnimmt, um anschließend beim Abgreifen und Verfahren des mindestens einen Stückgutes 2 nur minimale Bewegungsänderungen vornehmen zu müssen.

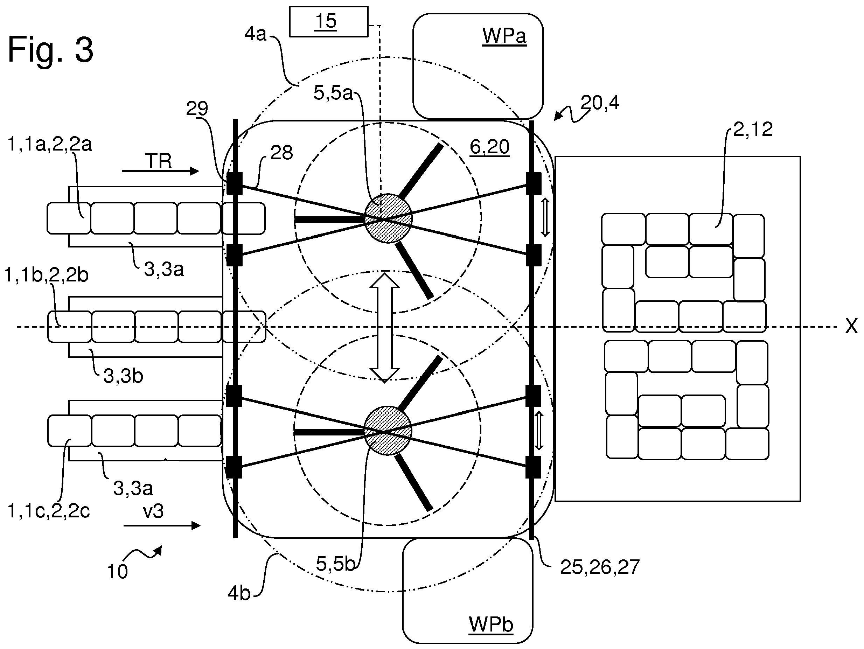

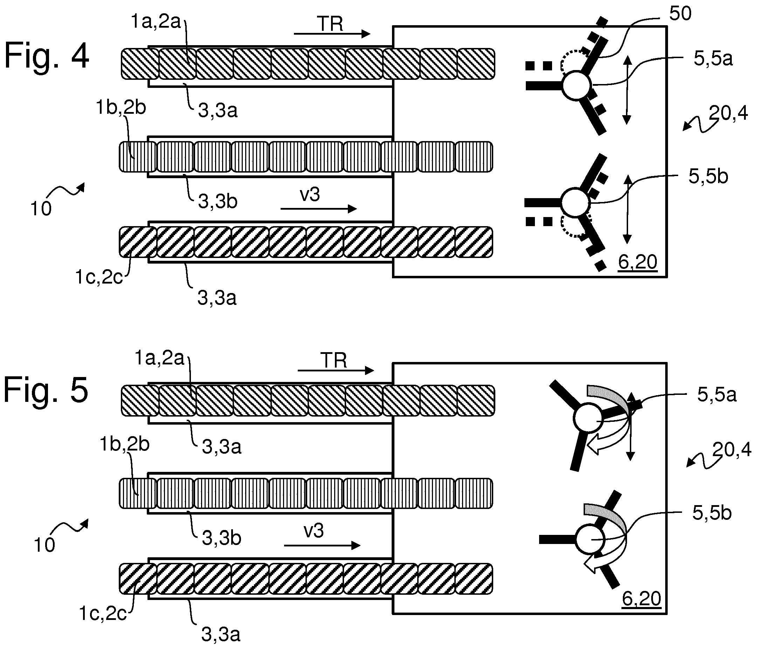

Die Fig. 3 zeigt schematisch eine besonders bevorzugte zweite Ausführungsform einer Handhabungsvorrichtung 10, bei der innerhalb eines Gruppiermoduls 20 zwei Manipulatoren 5a und 5b angeordnet sind, die gleichzeitig in drei Reihen 1a, 1b, 1c zugeführte Stückgüter 2a, 2b, 2c abarbeiten und entsprechend einem vorgegebenen Lagenschema 12 auf der Horizontalfördereinrichtung 6 des Gruppiermoduls 20 anordnen können. Figuren 4 und 5 zeigen ganz schematisch die unterschiedlichen Verstellmöglichkeiten einer Handhabungsvorrichtung 10 gemäß Fig. 3.

Gerade bei einer Anordnung von zwei oder mehr Manipulatoren 5a, 5b innerhalb eines Gruppiermoduls 20, die insbesondere überlappende Erfassungsbereiche 4a, 4b aufweisen können, kann eine Verstellbarkeit der Anordnung der Manipulatoren 5a, 5b innerhalb des Gruppiermoduls 20 besonders vorteilhaft Kollisionen der beiden Manipulatoren 5a, 5b miteinander vermeiden und somit die Variabilität und Flexibilität des Arbeitsweise des Gruppiermoduls 20 erhöhen. Insbesondere kann jeder der beiden Manipulatoren 5a, 5b wie im Zusammenhang mit den Figuren 1 und 2 beschrieben, senkrecht zur Transportrichtung TR verstellt werden (vgl. Fig. 4) und/oder zusätzlich durch eine Drehung in eine Vorzugs- Ausgangslage und/oder -ausrichtung gebracht werden (vgl. Fig. 5). Die Verstellung der Anordnung der Manipulatoren 5a, 5b innerhalb des Gruppiermoduls 20 kann dabei jeweils vor Beginn der Produktion, beispielsweise bei einer Umstellung auf ein neues Lagenschema 12, erfolgen. Es ist aber auch denkbar, dass die Anordnung der Manipulatoren 5a, 5b auch im laufenden Betrieb verstellt werden kann. Dabei erfolgt die Verstellung der Anordnung der Manipulatoren derart gesteuert, dass die Bauteile, beispielsweise Stellarme 50, der insbesondere durch Tripoden gebildeten Manipulatoren 5a, 5b nicht miteinander kollidieren. Die Manipulatoren 5a, 5b können beispielsweise symmetrisch verstellt werden, d.h. jeweils um eine gleiche Distanz quer zur Transportrichtung TR auseinander bewegt oder aufeinander zu bewegt werden. Hierbei können die beiden Manipulatoren 5a, 5b mechanisch miteinander gekoppelt sein, so dass für die Verstellung nur ein einziger Antrieb notwendig ist. Alternativ können die Manipulatoren 5a, 5b auch asymmetrisch verstellt werden, wobei beispielsweise beide Manipulatoren 5a, 5b in dieselbe Richtung senkrecht zur Transportrichtung TR verfahren werden. Hierbei können die Manipulatoren 5a, 5b entweder um dieselbe Distanz oder aber um verschiedene Distanzen bewegt werden. Alternativ kann auch einer der Manipulatoren 5a beispielsweise in Transportrichtung TR gesehen in einem ersten Abstand nach rechts bewegt werden und der andere Manipulator 5b in Transportrichtung TR gesehen in einem zweiten geringeren oder größeren Abstand nach links bewegt werden usw. In diesem Fall erfolgt die Verstellung der beiden Manipulatoren 5a, 5b unabhängig voneinander.

Bei der in Fig. 3 dargestellten Anordnung der Manipulatoren 5a, 5b können Stückgüter 2b der mittleren Reihe 1b erst durch einen der Manipulatoren 5a, 5b erfasst werden, wenn die Stückgüter 2b bereits ein ganzes Stück auf der Horizontalfördereinrichtung 6 in Transportrichtung TR innerhalb des Gruppiermoduls 20 bewegt worden sind. Durch eine Verschiebung eines der Manipulatoren 5a, 5b in Richtung einer Mittelachse X des Gruppiermoduls 20 verschiebt sich der Erfassungsbereich 4a, 4b des Manipulators 5a, 5b in Richtung der Mittelachse X, so dass nunmehr auch Stückgüter 2b direkt beim Übertritt auf die Horizontalfördereinrichtung 6 des Gruppiermoduls 20 erfasst und neu positioniert werden können.

Weiterhin kann am Gruppiermodul 20 mindestens eine Wartungsposition WP für die Manipulatoren 5a, 5b vorgesehen sein. Vorzugsweise ist für jeden Manipulator 5a, 5b eine Wartungsposition WPa, WPb vorgesehen. Sollte einer der Manipulatoren, beispielsweise Manipulator 5a, ausfallen, so dass dieser repariert werden muss, kann das Gruppiermodul 20 weiterhin in einem Notbetrieb mit reduzierter Leistung verwendet werden. Der defekte Manipulator 5a wird in die Wartungsposition WPa außerhalb des Erfassungsbereichs 4 verfahren und kann in dieser Wartungsposition WPa repariert und/oder aus dem Gruppiermodul 20 entnommen und ggfl. ersetzt werden. Die einlaufenden Stückgüter 2a, 2b, 2c werden nunmehr nur noch von dem im Gruppiermodul 20 verbleibenden Manipulator 5b bearbeitet. Hierzu kann es i.d.R. notwendig sein, die Zufuhrgeschwindigkeit v3 der Transporteinrichtungen 3a, 3b, 3c anzupassen, insbesondere zu reduzieren. Weiterhin muss i.d.R. das Programm, nach dem der Manipulator 5b die Stückgüter 2a, 2b, 2c abgreift, um das gewünschte Lagenschema 12 zu erzeugen, geändert werden. Dies erfolgt vorzugsweise über eine Umprogrammierung der Steuerungseinrichtung 15. Weiterhin kann es in dem Notbetrieb ggfl. vorteilhaft sein, nur noch Stückgüter 2a, 2b und/oder 2c über ein oder zwei Transportbänder 1a, 1b und/oder 1c zu dem Gruppiermodul 20 zur Bearbeitung durch den verbleibenden Manipulator 5b zuzuführen.

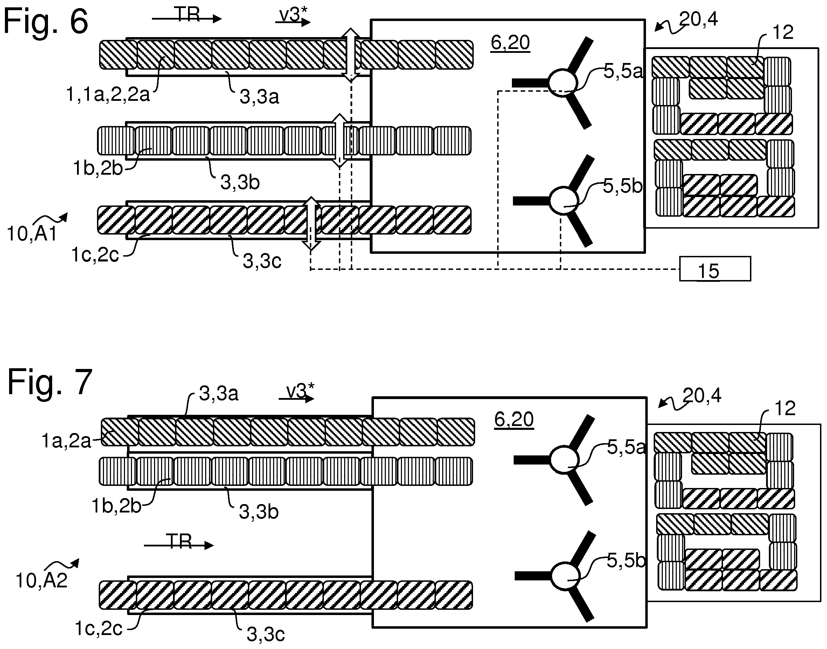

Die Fig. 6 zeigt eine schematische Ansicht einer dritten Ausführungsform einer Handhabungsvorrichtung 10 in einer ersten Arbeitsanordnung A1, und Fig. 7 zeigt diese dritten Ausführungsform der Handhabungsvorrichtung 10 in einer zweiten Arbeitsanordnung A2. Die Zuführung von Stückgütern 2, 2a, 2b, 2c zum Gruppiermodul 20 erfolgt über drei parallele Transporteinrichtungen 3, 3a, 3b, 3c. Die Anordnung der Stückgüter 2, 2a, 2b, 2c innerhalb des Gruppiermoduls 20 gemäß einem gewünschten Lagenschema 12 erfolgt insbesondere durch zwei gemäß den Figuren 1 bis 3 verstellbare Manipulatoren 5, 5a, 5b, die insbesondere quer zur Transportrichtung TR verschieblich und/oder drehbeweglich ausgebildet sind.

Zumindest eine der Transporteinrichtungen 3, 3a, 3b, 3c ist quer zur Transportrichtung TR verschieblich, so dass unterschiedliche Anordnungen der Transporteinrichtungen 3, 3a, 3b, 3c innerhalb der Handhabungsvorrichtung 10 möglich sind. Die schematische Ansicht der Fig. 6 zeigt eine erste Arbeitsanordnung A1, bei der die drei Transporteinrichtungen 3a, 3b, 3c derart angeordnet sind, dass zwischen der einen äußeren Transporteinrichtung 3a und der mittleren Transporteinrichtung 3b ein erster Abstand d1 ausgebildet ist und zwischen der anderen äußeren Transporteinrichtung 3c und der mittleren Transporteinrichtung 3b ein zweiter Abstand d2 ausgebildet ist, der in etwa dem ersten Abstand d1 entspricht. In diesem Fall spricht man insbesondere von einer symmetrischen Zuführung von Stückgütern 2, 2a, 2b, 2c.

Dagegen sind in der in Fig. 7 dargestellten zweiten Arbeitsanordnung A2 die Transporteinrichtungen 3a, 3b direkt aneinandergrenzend angeordnet, während die dritte Transporteinrichtung 3c in einem dritten Abstand d3 zur mittleren Transporteinrichtung 3b angeordnet ist. In diesem Fall spricht man insbesondere von einer asymmetrischen Zuführung von Stückgütern 2, 2a, 2b, 2c. Beispielsweise kann die Handhabungsvorrichtung 10 durch ein Verschieben der mittleren Transporteinrichtung 3b in Richtung der äußeren Transporteinrichtung 3a von der ersten Arbeitsanordnung A1 in die zweite Arbeitsanordnung A2 überführt werden. Der dritte Abstand d3 entspricht dann im Wesentlichen der Summe aus dem ersten Abstand d1 und dem zweiten Abstand d2.

Die Anordnung der zuführenden Transporteinrichtungen 3a, 3b, 3c ist abhängig vom zu erstellenden Lagenschema 12 und insbesondere von den hierzu notwendigen, durch die Manipulatoren 5a, 5b durchzuführenden Verfahrensschritte. Die Manipulatoren 5a, 5b werden insbesondere durch eine in Fig. 6 dargestellte Steuerungseinrichtung 15 angesteuert und/oder kontrolliert. Diese steht weiterhin vorzugsweise mit der mindestens einen quer zur Transportrichtung TR verschieblichen Transporteinrichtung 3, 3a, 3b, 3c in elektronischer Verbindung und kann eine entsprechende Anordnung derselben innerhalb der Handhabungsvorrichtung 10 ansteuern und/oder kontrollieren. Beispielsweise kontrolliert die Steuerungseinrichtung 15 die der jeweiligen verschieblichen Transporteinrichtung 3, 3a, 3b, 3c zugeordnete Stellvorrichtung, beispielsweise Stellantrieb, um die mindestens eine Transporteinrichtung 3, 3a, 3b, 3c in gewünschter Weise zu verstellen und/oder anzuordnen.

Auch wenn im Zusammenhang mit den Figuren 6 und 7 nur eine Verstellung der mittleren Transporteinrichtung 3b dargestellt ist, so kann auch zusätzlich eine Verstellung einer oder beider äußerer Transporteinrichtungen 3a, 3c vorteilhaft sein. Insbesondere in der zweiten Arbeitsanordnung A2 gemäß Fig. 2 kann in einem Verfahrensschritt vorgesehen sein, dass der Manipulator 5a jeweils mindestens ein Stückgut 2a, 2b der beiden direkt benachbarten Reihen 1a, 1b abgreift und diese gemeinsam in eine definierte Zielposition und/oder -lage und/oder -ausrichtung auf der Horizontalfördereinrichtung 6 des Gruppiermoduls 20 befördert. Sofern mehr als eine Transporteinrichtung 3, 3a, 3b, 3c quer zur Transportrichtung TR verstellbar ist, so ist vorzugsweise vorgesehen, dass die Transporteinrichtungen 3, 3a, 3b, 3c jeweils einzeln und unabhängig voneinander einstellbar sind. Somit ist jeder verstellbaren, insbesondere verschieblichen Transporteinrichtung 3, 3a, 3b, 3c eine Stellvorrichtung, beispielsweise ein Stellantrieb, zugeordnet. Durch eine entsprechend dem zu erstellenden Lagenschema 12 angepasste Anordnung der Transporteinrichtungen 3, 3a, 3b, 3c kann insbesondere bei einer drei- oder mehrbahnigen Zuführung von Stückgütern 2a, 2b, 2c der notwendige Platz zum Abgreifen von Stückgütern 2a, 2b, 2c durch die Manipulatoren 5, 5a, 5b erzeugt werden, insbesondere zum Abgreifen von Stückgütern 2b der mittleren Reihe 1b.

Auch wenn in den dargestellten Ausführungsbeispielen Transporteinrichtungen 3, 3a, 3b, 3c dargestellt sind, die jeweils dieselbe Breite der Transportspur senkrecht zur Transportrichtung TR aufweisen und auf denen jeweils eine Stückgutreihe 1, 1a, 1b, 1c angeordnet ist und transportiert wird, so kann auch vorgesehen sein, Transporteinrichtungen 3 unterschiedlicher Breite zu verwenden, beispielsweise mindestens eine erste Transporteinrichtung 3 mit einer ersten Breite, auf der eine Stückgutreihe 1 angeordnet und befördert werden kann und eine zweite Transporteinrichtung mit einer zweiten Breite, auf der mindestens zwei Stückgutreihen nebeneinander angeordnet und befördert werden können, wobei mindestens eine der unterschiedlichen breiten Transporteinrichtungen quer zur Transportrichtung TR verschieblich ist. Dies ist insbesondere vorteilhaft, wenn in einer Mehrzahl der Verfahrensschritte gemäß dem gewünschten Lagenschema 12 vorteilhaft mindestens zwei Stückgüter von benachbarten Reihen durch den Manipulator 5 gemeinsam erfasst und in eine Zielposition und/oder -ausrichtung verbracht werden sollen.

Weiterhin kann es gemäß einer nicht dargestellten Ausführungsform auch bei einer einbahnigen Zuführung von Stückgütern 2 auf nur einer Transporteinrichtung 3 vorteilhaft sein, diese quer zur Transportrichtung TR verstellbar zu gestalten. Die Transporteinrichtung 3 kann beispielsweise gemäß dem gewünschten Lagenschema 12 derart angeordnet werden, dass zumindest eines der Stückgüter 2 zur Transporteinrichtung 3 fluchtend auf der Horizontalfördereinrichtung 6 weiter transportiert wird und seine Zielposition gemäß dem Lagenschema 12 einnimmt, insbesondere relativ zu den anderen, durch den mindestens einen Manipulator 5 erfassten und manipulierten Stückgütern 2. Das mindestens eine Stückgut 2 muss in diesem Fall nicht durch den Manipulator 5 erfasst und manipuliert werden, so dass die Zahl der vom Manipulator 5 durchzuführenden Verfahrensschritte durch eine geeignete Anordnung der Transporteinrichtung 3 reduziert und somit der Durchsatz erhöht werden kann.

Bei allen hier beschriebenen Ausführungsformen erfolgt die Verstellung der Anordnung der Transporteinrichtungen 3, 3a, 3b, 3c innerhalb der Handhabungsvorrichtung 10 quer zur Transportrichtung TR insbesondere jeweils vor Beginn der Produktion, beispielsweise bei einer Umstellung auf ein neues Lagenschema 12.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezuaszeichenliste

- 1, 1a, 1b, 1c: Reihe, Parallelreihe
- 2, 2a, 2b, 2c: Stückgut
- 3, 3a, 3b, 3c: Transporteinrichtung
- 4, 4a, 4b: Erfassungsbereich
- 4-1, 4-2: Erfassungsbereich
- 5, 5a, 5b: Manipulator
- 6: Horizontalfördereinrichtung
- 10: Handhabungsvorrichtung
- 12: gewünschtes Lagenschema
- 15: Steuerungseinrichtung
- 20: Gruppiermodul
- 25: Tragekonstruktion
- 26: Rahmenelement
- 27: Schlittenführung
- 28: Rahmenelement
- 29: Schlitten
- 50: Stellarme

- A1 / A2: erste / zweite Arbeitsposition
- AP1 / AP2: erste / zweite Arbeitsanordnung
- d1 / d2 / d3: erster / zweiter / dritter Abstand
- P: Zielposition
- TR: Transportrichtung
- v3, v6: Transportgeschwindigkeit, Zufuhrgeschwindigkeit
- WP, WPa, WPb: Wartungsposition
- X: Mittelachse

## Patentansprüche

1. Vorrichtung (10) zum Umgang mit in mindestens einer Reihe (1) hintereinander bewegten Stückgütern (2) umfassend:
- mindestens eine Transporteinrichtung (3) zur Zuführung der Stückgüter (2) zu einem Gruppiermodul (20),
- mindestens einen in einer Transportrichtung (TR) der Stückgüter (2) innerhalb des Gruppiermoduls (20) angeordneten Manipulator (5), der zur klemmenden und/oder kraft- und/oder formschlüssigen Erfassung jeweils wenigstens eines Stückgutes (2) innerhalb eines Erfassungsbereiches (4) sowie zur räumlichen Abtrennung des wenigstens einen Stückgutes (2) von der mindestens einen Reihe (1) und zu ihrer Verbringung in eine definierte relative Zielposition (P) und/oder
- ausrichtung gegenüber nachfolgenden Stückgütern (2) vorbereitet und ausgestattet ist, wobei die Stückgüter (2) jeweils von der mindestens einen Reihe (1) in Transportrichtung (TR) in den Erfassungsbereich (4) gelangen, und
- wobei der mindestens eine Manipulator (5) innerhalb des Gruppiermoduls (20) in seiner relativen Position, insbesondere in einer Richtung mit einer Querkomponente zur Transportrichtung (TR), veränderlich ist.

2. Vorrichtung (10) nach Anspruch 1, wobei die Vorrichtung (10) innerhalb des Gruppiermoduls (20) zwei oder mehr in einer Transportrichtung (TR) der Stückgüter (2) nebeneinander oder versetzt nebeneinander angeordnete Manipulatoren (5) umfasst, wobei wenigstens einer der mindestens zwei Manipulatoren (5) innerhalb des Gruppiermoduls (20) in seiner relativen Position, insbesondere in einer Richtung mit einer Querkomponente zur Transportrichtung (TR), veränderlich ist.

3. Vorrichtung (10) nach Anspruch 1, wobei die Vorrichtung (10) mindestens zwei parallele Transporteinrichtungen (3) zur Zuführung von mindestens zwei parallelen Reihen (1) hintereinander bewegter Stückgüter (2) umfasst; und mindestens einen in einer Transportrichtung (TR) der Stückgüter (2) befindlichen Manipulator, wobei der Manipulator (5) innerhalb des Gruppiermoduls (20) in seiner relativen Position, insbesondere in einer Richtung mit einer Querkomponente zur Transportrichtung (TR), veränderlich ist.

4. Vorrichtung (10) nach einem der Ansprüche 1 bis 3, bei welcher der wenigstens eine Manipulator (5) im laufenden Betrieb oder vorbereitend für einen Positionierungs- und/oder Lagenbildungsbetrieb innerhalb des Gruppiermoduls (20) in seiner relativen Position bewegbar ist.

5. Vorrichtung (10) nach einem der voranstehenden Ansprüche, bei welcher der wenigstens eine Manipulator (5) zumindest innerhalb einer zu einer Transportebene der Stückgüter (2) parallelen, insbesondere horizontalen Ebene bewegbar und/oder verschiebbar ist und/oder bei welcher der wenigstens eine Manipulator (5) zumindest um eine in etwa vertikal zur Transportebene der Stückgüter (2) stehenden, insbesondere vertikalen Drehachse bewegbar und/oder verdrehbar ist.

6. Vorrichtung (10) nach einem der voranstehenden Ansprüche, bei der jeder von wenigstens zwei Manipulatoren (5) mindestens einer von zwei oder mehr parallelen Transporteinrichtungen (3) räumlich zugeordnet und innerhalb dieser räumlichen Zuordnung beweglich angeordnet ist.

7. Vorrichtung (10) nach einem der voranstehenden Ansprüche, bei welcher der mindestens eine Manipulator (5) oder zumindest einer von mehreren Manipulatoren (5) zur Verdrehung der erfassten Stückgüter (2) beim Verbringen in die definierte relative Zielposition (P) und/oder -ausrichtung vorbereitet und ausgestattet ist/sind und/oder wobei der mindestens eine Manipulator (5) zur fluchtenden Verschiebung der erfassten Stückgüter (2) gegenüber den nachfolgenden Stückgütern (2) in Transportrichtung (TR) vorbereitet und ausgestattet ist und/oder wobei der mindestens eine Manipulator (5) zur Verschiebung der erfassten Stückgüter (2) gegenüber den nachfolgenden Stückgütern (2) mit einem seitlichen Versatz vorbereitet und ausgestattet ist.

8. Vorrichtung (10) nach einem der voranstehenden Ansprüche, bei welcher der mindestens eine Manipulator (5) oder zumindest einer von mehreren Manipulatoren (5) durch einen Parallelkinematik-Roboter mit einer innerhalb des Erfassungsbereiches (4) beweglichen und drehbaren Greifeinrichtung zur Erfassung und Positionierung von jeweils einem Stückgut oder zur gleichzeitigen Erfassung und Positionierung von zwei oder mehr Stückgütern (2) gebildet ist.

9. Vorrichtung (10) nach einem der voranstehenden Ansprüche, bei der wenigstens eine von wenigstens zwei parallelen Transporteinrichtungen (3) zur Zuführung der Stückgüter (2) zum Gruppiermodul (20) in ihrer Position relativ zum Gruppiermodul (20), insbesondere in einer Richtung mit einer Querkomponente zur Transportrichtung (TR), veränderlich ist, insbesondere wobei die wenigstens zwei parallelen Transporteinrichtungen (3) in ihrem Abstand zueinander variabel einstellbar sind.

10. Verfahren zum Umgang mit in mindestens einer Reihe (1) hintereinander bewegten Stückgütern (2), bei dem
- die Stückgüter (2) in einen Erfassungsbereich (4) von mindestens einem in einer Transportrichtung (TR) der Stückgüter (2) innerhalb eines Gruppiermoduls (20) angeordneten Manipulator (5) bewegt werden,
- wonach wenigstens ein transportiertes Stückgut (2) durch den mindestens einen Manipulator (5) klemmend und/oder kraft- und/oder formschlüssig erfasst, von der mindestens einen Reihe (1) räumlich abgetrennt und in eine definierte relative Zielposition (P) und/oder -ausrichtung gegenüber nachfolgenden Stückgütern (2) gebracht wird,
- wobei die relative Position des wenigstens einen Manipulator (5) innerhalb des Gruppiermoduls (20), insbesondere in einer Richtung mit einer Querkomponente zur Transportrichtung (TR), verändert werden kann.

11. Verfahren nach Anspruch 10, wobei innerhalb des Gruppiermoduls (20) mindestens zwei in einer Transportrichtung (TR) der Stückgüter (2) nebeneinander oder versetzt nebeneinander angeordneten Manipulatoren (5) angeordnet sind, wobei wenigstens einer der mindestens zwei Manipulatoren (5) in seiner relativen Position innerhalb des Gruppiermoduls (20), insbesondere in einer Richtung mit einer Querkomponente zur Transportrichtung (TR), verändert werden kann und/oder wobei die Stückgüter (2) in mindestens zwei parallelen Reihen (1) dem Gruppiermodul (20) mit mindestens einem Manipulator (5) zugeführt werden.

12. Verfahren nach einem der Ansprüche 10 oder 11, bei dem der wenigstens eine Manipulator (5) im laufenden Betrieb oder vorbereitend für einen Positionierungs- und/oder Lagenbildungsbetrieb innerhalb des Gruppiermoduls (20)und/oder in seiner Position relativ zum Gruppiermoduls (20) bewegt werden kann.

13. Verfahren nach Anspruch 12, bei dem der wenigstens eine Manipulator (5) zumindest innerhalb einer zu einer Transportebene der Stückgüter (2) parallelen, insbesondere horizontalen Ebene bewegt und/oder verschoben werden kann und/oder bei dem der wenigstens eine Manipulator (5) zumindest um eine in etwa vertikal zur Transportebene der Stückgüter (2) stehenden, insbesondere vertikalen Drehachse bewegt und/oder verdreht werden kann.

14. Verfahren nach einem der Ansprüche 10 bis 13, bei dem die Stückgüter (2) in der mindestens einen Reihe (1) oder in jeder von mindestens zwei parallelen Reihen (1) in Transportrichtung (TR) ohne Abstände zueinander oder mit minimalen Abständen zueinander als geschlossene Formation zugeführt werden oder wobei innerhalb der mindestens einen Reihe (1) oder innerhalb mindestens einer der zwei oder mehr parallelen Reihen (1) einzelne Stückgüter (2) und/oder Gruppen (7) von Stückgütern (2) gebildet werden, die voneinander in einer Transportrichtung (TR) durch definierte Lücken (L) voneinander beabstandet sind, insbesondere wobei wahlweise gleiche oder unterschiedliche große Lücken (L) zwischen aufeinander folgenden Stückgütern (2) und/oder Gruppen (7) von Stückgütern (2) erzeugt werden.

15. Verfahren nach einem der Ansprüche 10 bis 14, bei dem die erfassten Stückgüter (2) beim Verbringen in die definierte relative Zielposition (P) und/oder -ausrichtung gedreht werden oder wobei die erfassten Stückgüter (2) gegenüber den nachfolgenden Stückgütern (2) in Transportrichtung (TR) fluchtend verschoben werden oder wobei die erfassten Stückgüter (2) gegenüber den nachfolgenden Stückgütern (2) mit einem seitlichen Versatz verschoben werden.
